# EUROPEAN PATENT SPECIFICATION

(11) **EP 4 187 286 B1**
(45) Date of publication and mention of the grant of the patent: **23.09.2026**
(21) Application number: 21846235.6
(22) Date of filing: 15.06.2021
(51) Int. Cl.: G01V 5/00, G01V 8/00, G01N 23/04, G01N 23/046, G01V 5/22, G01V 5/226

(54) **VEHICLE-MOUNTED CT SECURITY INSPECTION SYSTEM**
FAHRZEUGMONTIERTES CT-SICHERHEITSINSPEKTIONSSYSTEM
SYSTÈME D'INSPECTION DE SÉCURITÉ CT MONTÉ SUR VÉHICULE

(30) Priority: 22.07.2020 CN 202010710971
(43) Date of publication of application: 31.05.2023
(73) Proprietor: Tsinghua University, Haidian District, Beijing 100084 (CN); Nuctech Company Limited, TongFang Building Shuangqinglu Haidian District Beijing 100084 (CN)
(72) Inventor: CHEN, Zhiqiang, Beijing 100084 (CN); ZHANG, Li, Beijing 100084 (CN); HUANG, Qingping, Beijing 100084 (CN); LIANG, Jinning, Beijing 100084 (CN); HONG, Mingzhi, Beijing 100084 (CN); CHENG, Yi, Beijing 100084 (CN)
(74) Representative: Gunzelmann, Rainer
(86) International application number: PCT/CN2021/100168
(87) International publication number: WO 2022/017077

(56) References cited:
- CN-A- 1 993 269
- CN-A- 102 455 305
- CN-A- 102 749 657
- CN-A- 106 062 884
- CN-A- 108 873 089
- CN-A- 110 577 055
- CN-U- 205 581 322
- CN-U- 205 800 884
- CN-U- 206 497 215
- CN-U- 206 584 051
- CN-U- 207 232 045
- CN-U- 207 232 407
- CN-U- 208 188 377
- CN-U- 208 399 407
- JP-A- 2002 039 966
- JP-A- H08 127 282
- US-A1- 2009 074 138
- US-A1- 2011 206 179
- US-A1- 2017 276 619
- US-B1- 6 218 943

## Description

### TECHNICAL FIELD

The present disclosure relates to a technical field of mobile security inspection in security inspection technologies, and in particular to a vehicle-mounted CT (Computed Tomography) security inspection system.

### BACKGROUND

In the security inspection technology, due to special requirements of temporary large-scale gathering activities, vehicle-mounted article security inspection systems have been developed accordingly. Generally, traditional article security inspection machines, such as the MX100100D-type X-ray security inspection machine of NUCTECH and the ScanMobileTM130100-type mobile X-ray inspection system of SMITHS DETECTIONS are used in these security inspection systems. The traditional article security inspection machine acquires a perspective two-dimensional image of an inspected article. Due to overlapping of various substances in a luggage, it is difficult to accurately detect drugs/explosives mixed in substances of different types, and it is particularly difficult to identify the drugs/explosives from organic substances. In addition, the traditional article security inspection machine may only acquire perspective images along a ray direction, thus imaging of a same article at different placement angles will be different. A prohibited article is easily ignored by an image judger when it is placed at a specific angle. Based on the above reasons, when the traditional security inspection machine is used for inspection, it is still necessary to perform an open-package inspection, including a random inspection of luggage and package not suspicious in proportion, which brings not few pressures to the inspection. In addition, a real state inside an article may not be reflected on the perspective two-dimensional image. For example, when an interlayer exists, the article is required to be destructively disassembled, which also brings risks to the inspection work. Correspondingly, a vehicle-mounted security inspection system using the above-mentioned traditional article security inspection machine also has the above drawbacks.

JP2002039966A discloses an inspection vehicle, including a transfer conveyor for transferring articles, an inspecting apparatus for inspecting the articles being transferred, a carry-in conveyor constituted of being able to continuously carry in the articles before inspected to the transfer conveyor from outside the vehicle, and a carry-out means connected to the transfer conveyor for continuously carrying out the inspected articles to outside the vehicle.

CN205800884U discloses a logistics security inspection vehicle including an X-ray detection machine and a landslide. The X-ray detection machine includes an output end, and the landslide is provided below the output end of the X-ray detection machine. The output end is provided with a vertical buffer bag, which has an inlet and an outlet, an inlet diameter thereof is larger than an outlet diameter thereof, and the outlet is set above the landslide, with a gap between the outlet and the landslide. This solution adds a transitional buffer bag between the output end of the logistics security inspection vehicle's conveyor belt and the landslide, so that the package can pass through the buffering stage before falling into the landslide from the higher output end, and then enter the landslide with a smaller impact force, thus protecting items inside the package from damage.

US2011206179A1 discloses a multi-view X-ray inspection system. In one embodiment, a beam steering mechanism directs the electron beam from an X-ray source to multiple production targets which generate X-rays for scanning which are subsequently detected by a plurality of detectors to produce multiple image slices (views). The system is adapted for use in CT systems. In one embodiment of a CT system, the X-ray source and detectors rotate around the object covering an angle sufficient for reconstructing a CT image and then reverse to rotate around the object in the opposite direction. The inspection system, in any configuration, can be deployed inside a vehicle for use as a mobile detection system.

JPH08127282A discloses a vehicle made up by connecting, by means of an easily attachable/detachable mechanism, a tractor portion to pull a trailer portion to the trailer portion to carry an inspection X-ray CT device consisting of a cover container to house an X-ray CT device; and an operator control chamber to control the X-ray CT device.

### SUMMARY

An objective of the present disclosure is to provide a vehicle-mounted CT security inspection system to solve the above technical problems.

The invention is defined by the appended claims. According to an aspect of the present disclosure, a vehicle-mounted CT security inspection system is provided, including: a van truck and a CT security inspection apparatus, wherein the CT security inspection apparatus is arranged inside a van body of the van truck, the CT security inspection apparatus includes a CT scanner, an inlet transmitting mechanism and an outlet transmitting mechanism, the CT scanner is configured to detect an article and output a detection result, a longitudinal side wall of the van body has a side opening, a tail side wall of the van body has a tail opening, and the inlet transmitting mechanism and the outlet transmitting mechanism are respectively in communication with the tail opening and the side opening so as to receive an article to be detected and output a detected article.

In some embodiments, the vehicle-mounted CT security inspection system further includes a console, and the CT scanner sends the detection result to the console for output.

In some embodiments, the van body is divided into an operation room and an apparatus room, the side opening is located in a portion of the longitudinal side wall constituting the apparatus room, the operation room accommodates the console, and the apparatus room accommodates the CT scanner, the inlet transmitting mechanism and the outlet transmitting mechanism.

In some embodiments, the inlet transmitting mechanism, the CT scanner and the outlet transmitting mechanism are arranged in sequence from a tail of the truck to a head of the truck along a longitudinal direction of the van body.

According to the claimed invention, the CT security inspection apparatus further includes a steering transmitting mechanism, the steering transmitting mechanism is arranged between the CT scanner and the outlet transmitting mechanism and configured to rotate a transmitting direction of an article scanned by the CT scanner by a specific angle (α) along a horizontal plane direction, so that the outlet transmitting mechanism may extend to the side opening.

In some embodiments, the specific angle (α) is a right angle.

In some embodiments, the inlet transmitting mechanism includes an input terminal, the outlet transmitting mechanism includes an output terminal, the input terminal and the output terminal are switched between an unfolded state and a retracted state, in the unfolded state, the input terminal and the output terminal may respectively extend out of the van body through the tail opening and the side opening and incline toward a ground plane to form a ramp for transmitting the article, and in the retracted state, the input terminal and the output terminal may be respectively retracted into the van body through the tail opening and the side opening.

In some embodiments, the number of vehicle-mounted CT security inspection apparatuses is two, and inlet transmitting mechanisms, CT scanners and outlet transmitting mechanisms of the two CT security inspection apparatuses are arranged in parallel side by side.

In some embodiments, the number of vehicle-mounted CT security inspection apparatuses is two, opposite longitudinal side walls of the van body are respectively provided with a side opening, and each steering transmitting mechanism is configured to rotate a transmitting direction of a detected article output by the CT scanner by a specific angle along the horizontal plane direction, so that each outlet transmitting mechanism extends to each side opening.

In some embodiments, the specific angle is a right angle.

In some embodiments, a free door which is openable and closable is arranged between the operation room and the apparatus room for a communication or a separation between the operation room and the apparatus room.

In some embodiments, the portion of the longitudinal side wall constituting the operation room is provided with a free door, so that the operation room is in communication with an external environment.

In some embodiments, the vehicle-mounted CT security inspection system further includes a power supply system, and the power supply system includes a generator and a power interface capable of being connected with an external cable, wherein the power supply system is further provided with a power storage function.

In the vehicle-mounted CT security inspection system according to the present disclosure, the CT security inspection technology is used, and multi-dimensional information such as the density and the effective atomic number of the detected object may be acquired and used, so that the detection and the alarm of various drugs/explosives inside the luggage may be achieved, providing a higher detection ability and a lower false alarm rate. The vehicle-mounted type provides the security inspection system of the present disclosure with advantages such as mobile flexibility and short arrangement time, which may meet various requirements for random inspection, multi-site mobile inspection, temporary security inspection and the like.

### BRIEF DESCRIPTION OF THE DRAWINGS

FIG. 1 shows a top view of a vehicle-mounted CT security inspection system according to an embodiment of the present disclosure;
FIG. 2 shows a side view and a tail front view of a vehicle-mounted CT security inspection system in a working state according to an embodiment of the present disclosure;
FIG. 3 shows a top view of a vehicle-mounted CT security inspection system according to another embodiment of the present disclosure, wherein two CT security inspection apparatuses are shown; and
FIG. 4 shows a side view of a vehicle-mounted CT security inspection system in a non-working state according to an embodiment of the present disclosure, wherein a power supply system is shown.

It should be noted that the above-mentioned schematic structural diagrams are only a kind of structural illustration, they do not indicate actual dimensions of various structures and actual dimension ratios therebetween, and do not limit technical solutions of the present disclosure, neither.

### DETAILED DESCRIPTION OF EMBODIMENTS

The technical solutions of the present disclosure will be further described in detail below through embodiments and in combination with the accompanying drawings. In the specification, the same or similar reference numerals indicate the same or similar components. The following descriptions of the embodiments of the present disclosure with reference to the accompanying drawings are intended to explain a general inventive concept of the present disclosure, and should not be construed as limiting the present disclosure.

According to the general concept of the present disclosure, there is provided a vehicle-mounted CT security inspection system, including: a van truck and a CT security inspection apparatus, wherein the CT security inspection apparatus is arranged inside a van body of the van truck, the CT security inspection apparatus includes a CT scanner, an inlet transmitting mechanism and an outlet transmitting mechanism. The CT scanner is used to detect an article and output a detection result, a longitudinal side wall of the van body has a side opening, a tail side wall of the van body has a tail opening, and the inlet transmitting mechanism and the outlet transmitting mechanism are respectively in communication with the tail opening and the side opening so as to receive an article to be detected and output a detected article.

In addition, in the following detailed descriptions, for ease of explanation, numerous specific details are set forth in order to provide a comprehensive understanding of the embodiments of the present disclosure. Obviously, however, one or more embodiments may also be implemented without these specific details.

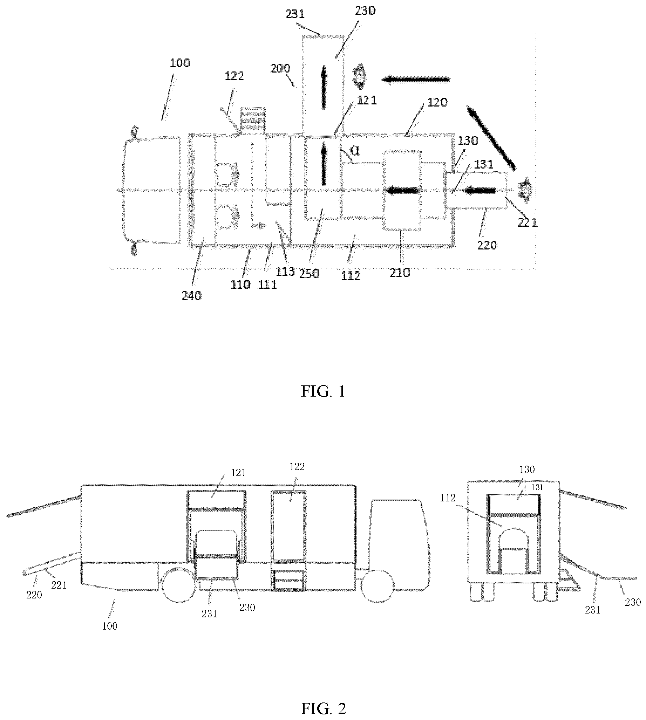

FIG. 1 shows a top view of a vehicle-mounted CT security inspection system according to an embodiment of the present disclosure. FIG. 2 shows a side view and a tail front view of a vehicle-mounted CT security inspection system in a working state according to an embodiment of the present disclosure.

As shown in FIG. 1, the vehicle-mounted CT security inspection system according to the present disclosure includes: a van truck 100 and a CT security inspection apparatus 200, wherein the CT security inspection apparatus 200 is arranged inside a van body 110 of the van truck 100. The CT security inspection apparatus 200 includes a CT scanner 210, an inlet transmitting mechanism 220, an outlet transmitting mechanism 230 and a console 240. The CT scanner 210 is used to detect an article and output a detection result to the console 240 for output, a longitudinal side wall 120 of the van body 110 has a side opening 121, a tail side wall 130 of the van body 110 has a tail opening 131, and the inlet transmitting mechanism 220 and the outlet transmitting mechanism 230 are respectively in communication with the tail opening 131 and the side opening 121 so as to receive an article to be detected and output a detected article.

In the present disclosure, the CT security inspection apparatus 200 is assembled onto a vehicle to form a vehicle-mounted CT security inspection system, which fully combines a detection accuracy of the CT technology with a mobile flexibility of the vehicle. A truck is used as a bearing device of the CT security inspection apparatus 200. Since a chassis of the truck has a good bearing capacity and a good trafficability, thus the apparatus may be well configured. A van body 110 is arranged behind a cab of the truck to accommodate the CT security inspection apparatus 200. The tail opening 131 and the side opening 121 of the van body 110 are respectively in communication with the inlet transmitting mechanism 220 and the outlet transmitting mechanism 230 of the CT security inspection apparatus 200. For an inspector, it is not required for himself/herself to enter an inside of the truck, and it is only required to place an article to be detected at the tail opening 131 of the truck and then walk outside the truck to the side opening 121 of the truck to pick up the detected article.

The van body 110 is divided into an operation room 111 and an apparatus room 112. The side opening 121 is located at a portion of the longitudinal side wall 120 constituting the apparatus room 112, the operation room 111 accommodates the console 240, and the apparatus room 112 accommodates the CT scanner 210, the inlet transmitting mechanism 220 and the outlet transmitting mechanism 230.

As shown in FIG. 1, a cabin of the van body 110 is divided into two portions of a front portion and a rear portion, by a partition plate. The front portion is the operation room 111 for accommodating an operating apparatus, and the rear portion is the apparatus room 112 for accommodating apparatuses for scanning and transmitting an article. Generally, the operation room 111 is smaller than the apparatus room 112, and it is only required to provide one console 240 and 1-2 working stations for a staff to judge a scanning result and control the apparatus in the apparatus room 112. The operation room 111 may be additionally provided with arrangements to increase a comfort of the staff. Generally, the apparatus room 112 is relatively large, and especially a length along a longitudinal direction of the truck is as large as possible to facilitate a placement of the related apparatus and the transmission of articles.

In an optional embodiment, the inlet transmitting mechanism 220, the CT scanner 210 and the outlet transmitting mechanism 230 are arranged in sequence from the tail of the truck to a head of the truck along a longitudinal direction of the van body 110.

The tail opening 131 of the van body 110 is aligned with the inlet transmitting mechanism 220 for a person to place the article, and the side opening 121 of the van body 110 is arranged beside the outlet transmitting mechanism 230 for a person to pick up the article through the side opening 121.

According to the claimed invention, the CT security inspection apparatus 200 further includes a steering transmitting mechanism 250 arranged between the CT scanner 210 and the outlet transmitting mechanism 230, and the steering transmitting mechanism is used to rotate a transmitting direction of an article scanned by the CT scanner 210 by a specific angle along a horizontal plane direction, so that the outlet transmitting mechanism 230 may directly face the side opening 121. The specific angle is a right angle.

As shown in the drawing, the CT scanning apparatus in the apparatus room 112 is arranged in the cabin along the longitudinal direction. An inlet of the CT scanning apparatus is close to the tail of the van body 110. A set of inlet transmitting mechanisms 220 are further arranged in order to facilitate the transmission of articles. Before being powered on for use, the apparatus may be unfolded and extend obliquely toward the ground outside the van body, and before being turned off and left, the apparatus may be retracted into the van. In order to facilitate transmitting the article to an outside of the van, a set of steering transmitting mechanisms are arranged in front of an outlet of the CT scanning apparatus and the set of steering transmitting mechanisms are used to steer a transmitting direction of the detected article toward the side opening 121. The outlet transmitting mechanism 230 extends in a changed direction till the side opening 121, and the detected article is transmitted to the side opening 121.

An input terminal 221 of the inlet transmitting mechanism 220 and an output terminal 231 of the outlet transmitting mechanism 230 may be switched between an unfolded state and a retracted stated. In the unfolded state, the input terminal 221 and the output terminal 231 may respectively extend out of the van body 110 through the tail opening 121 and the side opening 131 so as to form a ramp for transmitting the article. In the retracted state, the input terminal 221 and the output terminal 231 may be respectively retracted into the van body 110 through the tail opening 121 and the side opening 131, respectively.

When the vehicle-mounted CT security inspection system is on-site, before the device is powered on for use, the input terminal 221 and the output terminal 231 may be unfolded to the outside of the vehicle, and after the device is turned off and powered off, the input terminal 221 and the output terminal 231 may be retracted into the van.

In an optional embodiment, the number of vehicle-mounted CT security inspection apparatuses 200 is two, and inlet transmitting mechanisms 220, CT scanners 210 and outlet transmitting mechanisms 230 of the two CT security inspection apparatuses 200 are arranged in parallel side by side.

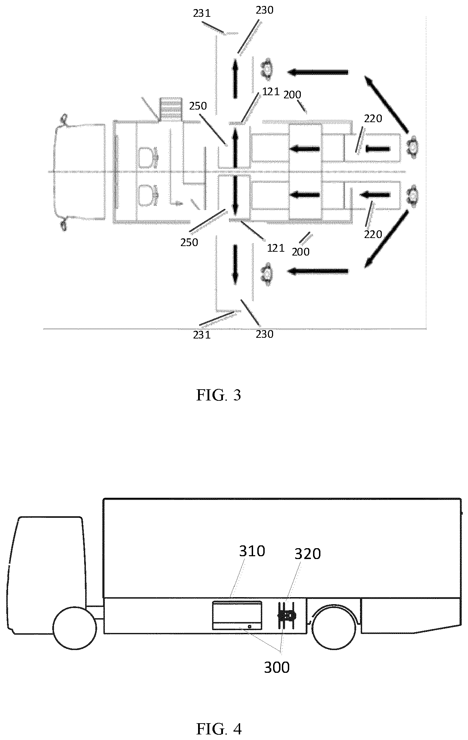

FIG. 3 shows a top view of a vehicle-mounted CT security inspection system according to another embodiment of the present disclosure, wherein two CT security inspection apparatuses 200 are shown. As shown in FIG. 3, the number of vehicle-mounted CT security inspection apparatuses is two, opposite longitudinal side walls 120 of the van body 110 are respectively provided with a side opening 121. Each steering transmitting mechanism 250 is used to rotate a transmitting direction of a detected article output by the CT scanner 210 by a specific angle along a horizontal plane direction, so that each outlet transmitting mechanism 230 may respectively extend to each side opening 121. The specific angle is a right angle.

In FIG. 3, the two CT security inspection apparatuses 200 are arranged symmetrically along a longitudinal centerline of the vehicle, the transmitting directions are rotated by the two steering transmitting mechanisms 250 to two opposite directions perpendicular to the longitudinal centerline of the vehicle and then the detected articles are respectively transmitted by the two outlet transmitting mechanisms 230 to the side openings on the two sides. Two people respectively place the articles onto the two inlet transmitting mechanisms 220 at the tail of the vehicle, and then each of the two walks to a side inlet on one side of the vehicle, respectively, waiting for the detected article to be transmitted out by the inlet transmitting mechanism 220, and then leaving. In this way, a detection speed may be accelerated and a personnel blockage at the detection point may be avoided.

A free door 113 allowing opening and closing is arranged between the operation room 111 and the apparatus room 112 for communication or separation between the operation room 111 and the apparatus room 112.

The free door 113 between the operation room 111 and the apparatus room 112 is convenient for the staff in the operation room 111 to enter the apparatus room 112 to perform necessary operations.

A portion of the longitudinal side wall 120 constituting the operation room 111 is provided with a free door 122, so that the operation room 111 is in communication with an external environment.

The operation room 111 is provided with a separate free door 122, which is convenient for an operator to enter and leave the operation room 111 through the free door 122.

The vehicle-mounted CT security inspection system further includes a power supply system 300. The power supply system 300 includes a generator 310 and a power interface 320 allowing a connection with an external cable, wherein the power supply system 300 further has a power storage function.

FIG. 4 shows a side view of a vehicle-mounted CT security inspection system in a non-working state according to an embodiment of the present disclosure, wherein a power supply system 300 is shown. As shown in FIG. 4, the generator 310 and the power interface 320 are arranged below the van body 110 and suspended to a vehicle frame, so that an inner space of the van body 110 may be not occupied.

The present disclosure has been described with reference to the accompanying drawings, however, the embodiments disclosed in the accompanying drawings are intended to illustrate preferred embodiments of the present disclosure and should not be construed as limiting the present disclosure.

The scope of the present disclosure is defined by the claims.

## Claims

1. A vehicle-mounted CT security inspection system, comprising: a van truck (100) and a CT security inspection apparatus (200), wherein the CT security inspection apparatus is arranged inside a van body (110) of the van truck, the CT security inspection apparatus comprises a CT scanner (210), an inlet transmitting mechanism (220) and an outlet transmitting mechanism (230), the CT scanner is configured to detect an article and output a detection result, a longitudinal side wall (120) of the van body has a side opening (121), a tail side wall (130) of the van body has a tail opening (131), and the inlet transmitting mechanism and the outlet transmitting mechanism are respectively in communication with the tail opening and the side opening so as to receive an article to be detected and output a detected article, wherein
the CT security inspection apparatus further comprises a steering transmitting mechanism (250), the steering transmitting mechanism is arranged between the CT scanner and the outlet transmitting mechanism and configured to rotate a transmitting direction of an article scanned by the CT scanner by a specific angle (α) along a horizontal plane direction, so that the outlet transmitting mechanism extends to the side opening.

2. The vehicle-mounted CT security inspection system according to claim 1, wherein the vehicle-mounted CT security inspection system further comprises a console (240), and the CT scanner sends the detection result to the console for output.

3. The vehicle-mounted CT security inspection system according to claim 2, wherein the van body is divided into an operation room (111) and an apparatus room (112), the side opening is located in a portion of the longitudinal side wall constituting the apparatus room, the operation room accommodates the console, and the apparatus room accommodates the CT scanner, the inlet transmitting mechanism and the outlet transmitting mechanism.

4. The vehicle-mounted CT security inspection system according to any one of claims 1 to 3, wherein the inlet transmitting mechanism, the CT scanner and the outlet transmitting mechanism are arranged in sequence from a tail of the truck to a head of the truck along a longitudinal direction of the van body.

5. The vehicle-mounted CT security inspection system according to claim 1, wherein the specific angle (α) is a right angle.

6. The vehicle-mounted CT security inspection system according to any one of claims 1-3, wherein the inlet transmitting mechanism comprises an input terminal (221), the outlet transmitting mechanism comprises an output terminal (231), the input terminal and the output terminal are switched between an unfolded state and a retracted state, in the unfolded state, the input terminal and the output terminal respectively extend out of the van body through the tail opening and the side opening and incline toward a ground plane to form a ramp for transmitting the article, and in the retracted state, the input terminal and the output terminal are respectively retracted into the van body through the tail opening and the side opening.

7. The vehicle-mounted CT security inspection system according to claim 4, wherein the number of vehicle-mounted CT security inspection apparatuses is two, and inlet transmitting mechanisms, CT scanners and outlet transmitting mechanisms of the two CT security inspection apparatuses are arranged in parallel side by side.

8. The vehicle-mounted CT security inspection system according to claim 1, wherein the number of vehicle-mounted CT security inspection apparatuses is two, opposite longitudinal side walls of the van body are respectively provided with a side opening, and each steering transmitting mechanism is configured to rotate a transmitting direction of a detected article output by the CT scanner by a specific angle along the horizontal plane direction, so that each outlet transmitting mechanism extends to each side opening.

9. The vehicle-mounted CT security inspection system according to claim 8, wherein the specific angle is a right angle.

10. The vehicle-mounted CT security inspection system according to claim 3, wherein a free door (113) which is openable and closable is arranged between the operation room and the apparatus room for a communication or a separation between the operation room and the apparatus room.

11. The vehicle-mounted CT security inspection system according to claim 10, wherein the portion of the longitudinal side wall constituting the operation room is provided with a free door (122), so that the operation room is in communication with an external environment.

12. The vehicle-mounted CT security inspection system according to claim 1, wherein the vehicle-mounted CT security inspection system further comprises a power supply system (300), and the power supply system comprises a generator (310) and a power interface (320) capable of being connected with an external cable, wherein the power supply system is further provided with a power storage function.

## Patentansprüche

1. Ein fahrzeugmontiertes CT-Sicherheitsinspektionssystem, umfassend:
einen Kastenwagen (100) und eine CT-Sicherheitsinspektionsvorrichtung (200),
wobei die CT-Sicherheitsinspektionsvorrichtung innerhalb eines Kastenwagenaufbaus (110) des Kastenwagens angeordnet ist, die CT-Sicherheitsinspektionsvorrichtung einen CT-Scanner (210), einen Einlass-Sendemechanismus (220) und einen Auslass-Sendemechanismus (230) umfasst, der CT-Scanner dazu eingerichtet ist, einen Gegenstand zu detektieren und ein Detektionsergebnis auszugeben, eine Längsseitenwand (120) des Kastenwagenaufbaus eine Seitenöffnung (121) aufweist,
eine Heckseitenwand (130) des Kastenwagenaufbaus eine Hecköffnung (131) aufweist und der Einlass-Sendemechanismus und der Auslass-Sendemechanismus jeweils mit der Hecköffnung und der Seitenöffnung in Verbindung stehen, um einen zu detektierenden Gegenstand aufzunehmen und einen detektierten Gegenstand auszugeben,
wobei die CT-Sicherheitsinspektionsvorrichtung ferner einen Lenk-Sendemechanismus (250) umfasst, wobei der Lenk-Sendemechanismus zwischen dem CT-Scanner und dem Auslass-Sendemechanismus angeordnet und dazu eingerichtet ist, eine Senderichtung eines durch den CT-Scanner gescannten Gegenstands um einen bestimmten Winkel (α) entlang einer Horizontalebenenrichtung zu drehen, so dass sich der Auslass-Sendemechanismus zu der Seitenöffnung erstreckt.

2. Das fahrzeugmontierte CT-Sicherheitsinspektionssystem nach Anspruch 1, wobei das fahrzeugmontierte CT-Sicherheitsinspektionssystem ferner eine Konsole (240) umfasst und der CT-Scanner das Detektionsergebnis zur Ausgabe an die Konsole sendet.

3. Das fahrzeugmontierte CT-Sicherheitsinspektionssystem nach Anspruch 2, wobei der Kastenwagenaufbau in einen Bedienraum (111) und einen Vorrichtungsraum (112) unterteilt ist, die Seitenöffnung in einem Abschnitt der Längsseitenwand angeordnet ist, der den Vorrichtungsraum bildet, der Bedienraum die Konsole aufnimmt und der Vorrichtungsraum den CT-Scanner, den Einlass-Sendemechanismus und den Auslass-Sendemechanismus aufnimmt.

4. Das fahrzeugmontierte CT-Sicherheitsinspektionssystem nach einem der Ansprüche 1 bis 3, wobei der Einlass-Sendemechanismus, der CT-Scanner und der Auslass-Sendemechanismus entlang einer Längsrichtung des Kastenwagenaufbaus in Reihenfolge von einem Heck des Kastenwagens zu einem Vorderteil des Kastenwagens angeordnet sind.

5. Das fahrzeugmontierte CT-Sicherheitsinspektionssystem nach Anspruch 1, wobei der bestimmte Winkel (α) ein rechter Winkel ist.

6. Das fahrzeugmontierte CT-Sicherheitsinspektionssystem nach einem der Ansprüche 1-3, wobei der Einlass-Sendemechanismus einen Eingabeendabschnitt (221) umfasst, der Auslass-Sendemechanismus einen Ausgabeendabschnitt (231) umfasst, der Eingabeendabschnitt und der Ausgabeendabschnitt zwischen einem ausgeklappten Zustand und einem eingefahrenen Zustand umgeschaltet werden, in dem ausgeklappten Zustand der Eingabeendabschnitt und der Ausgabeendabschnitt jeweils durch die Hecköffnung und die Seitenöffnung aus dem Kastenwagenaufbau herausragen und zu einer Bodenebene geneigt sind, um eine Rampe zum Senden des Gegenstands zu bilden, und in dem eingefahrenen Zustand der Eingabeendabschnitt und der Ausgabeendabschnitt jeweils durch die Hecköffnung und die Seitenöffnung in den Kastenwagenaufbau eingefahren sind.

7. Das fahrzeugmontierte CT-Sicherheitsinspektionssystem nach Anspruch 4, wobei die Anzahl von fahrzeugmontierten CT-Sicherheitsinspektionsvorrichtungen zwei beträgt und Einlass-Sendemechanismen, CT-Scanner und Auslass-Sendemechanismen der zwei CT-Sicherheitsinspektionsvorrichtungen parallel nebeneinander angeordnet sind.

8. Das fahrzeugmontierte CT-Sicherheitsinspektionssystem nach Anspruch 1, wobei die Anzahl von fahrzeugmontierten CT-Sicherheitsinspektionsvorrichtungen zwei beträgt, gegenüberliegende Längsseitenwände des Kastenwagenaufbaus jeweils mit einer Seitenöffnung versehen sind und jeder Lenk-Sendemechanismus dazu eingerichtet ist, eine Senderichtung eines durch den CT-Scanner ausgegebenen detektierten Gegenstands um einen bestimmten Winkel entlang der Horizontalebenenrichtung zu drehen, so dass sich jeder Auslass-Sendemechanismus zu jeder Seitenöffnung erstreckt.

9. Das fahrzeugmontierte CT-Sicherheitsinspektionssystem nach Anspruch 8, wobei der bestimmte Winkel ein rechter Winkel ist.

10. Das fahrzeugmontierte CT-Sicherheitsinspektionssystem nach Anspruch 3, wobei eine freie Tür (113), die öffenbar und schließbar ist, zwischen dem Bedienraum und dem Vorrichtungsraum für eine Verbindung oder eine Trennung zwischen dem Bedienraum und dem Vorrichtungsraum angeordnet ist.

11. Das fahrzeugmontierte CT-Sicherheitsinspektionssystem nach Anspruch 10, wobei der Abschnitt der Längsseitenwand, der den Bedienraum bildet, mit einer freien Tür (122) versehen ist, so dass der Bedienraum mit einer äußeren Umgebung in Verbindung steht.

12. Das fahrzeugmontierte CT-Sicherheitsinspektionssystem nach Anspruch 1, wobei das fahrzeugmontierte CT-Sicherheitsinspektionssystem ferner ein Stromversorgungssystem (300) umfasst und das Stromversorgungssystem einen Generator (310) und eine Stromschnittstelle (320), die mit einem externen Kabel verbunden werden kann, umfasst, wobei das Stromversorgungssystem ferner mit einer Stromspeicherfunktion versehen ist.

## Revendications

1. Un système d'inspection de sécurité CT monté sur véhicule, comprenant : un camion fourgon (100) et un appareil d'inspection de sécurité CT (200), dans lequel l'appareil d'inspection de sécurité CT est agencé à l'intérieur d'une caisse de fourgon (110) du camion fourgon, l'appareil d'inspection de sécurité CT comprend un scanner CT (210), un mécanisme de transport d'entrée (220) et un mécanisme de transport de sortie (230), le scanner CT est configuré pour détecter un objet et délivrer un résultat de détection, une paroi latérale longitudinale (120) de la caisse de fourgon comporte une ouverture latérale (121), une paroi latérale arrière (130) de la caisse de fourgon comporte une ouverture arrière (131), et le mécanisme de transport d'entrée et le mécanisme de transport de sortie communiquent respectivement avec l'ouverture arrière et l'ouverture latérale de manière à recevoir un objet à détecter et à faire sortir un objet détecté,
dans lequel
l'appareil d'inspection de sécurité CT comprend en outre un mécanisme de transport d'orientation (250), le mécanisme de transport d'orientation est agencé entre le scanner CT et le mécanisme de transport de sortie et configuré pour faire tourner une direction de transport d'un objet scanné par le scanner CT d'un angle spécifique (α) selon une direction de plan horizontal, de sorte que le mécanisme de transport de sortie s'étende jusqu'à l'ouverture latérale.

2. Le système d'inspection de sécurité CT monté sur véhicule selon la revendication 1, dans lequel le système d'inspection de sécurité CT monté sur véhicule comprend en outre une console (240), et le scanner CT envoie le résultat de détection à la console pour sortie.

3. Le système d'inspection de sécurité CT monté sur véhicule selon la revendication 2, dans lequel la caisse de fourgon est divisée en une salle d'exploitation (111) et une salle d'appareillage (112), l'ouverture latérale est située dans une portion de la paroi latérale longitudinale constituant la salle d'appareillage, la salle d'exploitation accueille la console, et la salle d'appareillage accueille le scanner CT, le mécanisme de transport d'entrée et le mécanisme de transport de sortie.

4. Le système d'inspection de sécurité CT monté sur véhicule selon l'une quelconque des revendications 1 à 3, dans lequel le mécanisme de transport d'entrée, le scanner CT et le mécanisme de transport de sortie sont agencés en séquence depuis une extrémité arrière du camion jusqu'à une extrémité avant du camion suivant une direction longitudinale de la caisse de fourgon.

5. Le système d'inspection de sécurité CT monté sur véhicule selon la revendication 1, dans lequel l'angle spécifique (α) est un angle droit.

6. Le système d'inspection de sécurité CT monté sur véhicule selon l'une quelconque des revendications 1-3, dans lequel le mécanisme de transport d'entrée comprend un terminal d'entrée (221), le mécanisme de transport de sortie comprend un terminal de sortie (231), le terminal d'entrée et le terminal de sortie sont commutés entre un état déployé et un état rétracté, dans l'état déployé, le terminal d'entrée et le terminal de sortie s'étendent respectivement hors de la caisse de fourgon à travers l'ouverture arrière et l'ouverture latérale et s'inclinent vers un plan de sol pour former une rampe destinée au transport de l'objet, et dans l'état rétracté, le terminal d'entrée et le terminal de sortie sont respectivement rétractés dans la caisse de fourgon à travers l'ouverture arrière et l'ouverture latérale.

7. Le système d'inspection de sécurité CT monté sur véhicule selon la revendication 4, dans lequel le nombre d'appareils d'inspection de sécurité CT montés sur véhicule est de deux, et des mécanismes de transport d'entrée, des scanners CT et des mécanismes de transport de sortie des deux appareils d'inspection de sécurité CT sont agencés en parallèle côte à côte.

8. Le système d'inspection de sécurité CT monté sur véhicule selon la revendication 1, dans lequel le nombre d'appareils d'inspection de sécurité CT montés sur véhicule est de deux, des parois latérales longitudinales opposées de la caisse de fourgon sont respectivement pourvues d'une ouverture latérale, et chaque mécanisme de transport d'orientation est configuré pour faire tourner une direction de transport d'un objet détecté délivré par le scanner CT d'un angle spécifique selon la direction de plan horizontal, de sorte que chaque mécanisme de transport de sortie s'étende jusqu'à chaque ouverture latérale.

9. Le système d'inspection de sécurité CT monté sur véhicule selon la revendication 8, dans lequel l'angle spécifique est un angle droit.

10. Le système d'inspection de sécurité CT monté sur véhicule selon la revendication 3, dans lequel une porte libre (113) qui peut être ouverte et fermée est agencée entre la salle d'exploitation et la salle d'appareillage pour une communication ou une séparation entre la salle d'exploitation et la salle d'appareillage.

11. Le système d'inspection de sécurité CT monté sur véhicule selon la revendication 10, dans lequel la portion de la paroi latérale longitudinale constituant la salle d'exploitation est pourvue d'une porte libre (122), de sorte que la salle d'exploitation est en communication avec un environnement extérieur.

12. Le système d'inspection de sécurité CT monté sur véhicule selon la revendication 1, dans lequel le système d'inspection de sécurité CT monté sur véhicule comprend en outre un système d'alimentation électrique (300), et le système d'alimentation électrique comprend un générateur (310) et une interface d'alimentation (320) pouvant être connectée à un câble externe, dans lequel le système d'alimentation électrique est en outre pourvu d'une fonction de stockage d'énergie.
